# EUROPEAN PATENT APPLICATION

(11) **EP 3 079 384 A1**
(43) Date of publication of application: **12.10.2016**
(21) Application number: 13900817.1
(22) Date of filing: 30.12.2013
(51) Int. Cl.: H04W 4/18

(54) **METHOD FOR TRANSMITTING SMALL DATA PACKET, BASE STATION, AND USER EQUIPMENT**

(71) Applicant: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Gill Jennings & Every LLP
(86) International application number: PCT/CN2013/090921
(87) International publication number: WO 2015/100548

(57) **Abstract**

Embodiments of the present invention provide a small data packet transmission method, a base station, and user equipment. The method includes: receiving, by a base station, a radio resource control RRC connection request sent by user equipment, where the RRC connection request includes first indication information, and the first indication information is used to indicate, to the base station, small data packet transmission; sending, by the base station, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB; receiving, by the base station, an RRC setup complete message sent by the user equipment by using the first RB; and performing, by the base station, the small data packet transmission to the user equipment by using the second RB.

## Description

### TECHNICAL FIELD

Embodiments of the present invention relate to the field of communications technologies, and in particular, to a small data packet transmission method, a base station, and user equipment.

### BACKGROUND

Long Term Evolution (Long Term Evolution, LTE) is Long Term Evolution of a Universal Mobile Telecommunications System technology leaded by the 3rd Generation Partnership Project, and can provide a higher data transmission rate for users. This advantage makes Long Term Evolution more applicable to large data packet transmission. A general process of initiating a data transmission service in LTE by user equipment (User Device, UE) is: first setting up a signaling radio bearer 1 (Signaling Radio Bearer, SRB1), entering a radio resource control (Radio Resource Control, RRC) connected state, and then setting up an SRB2 and a data radio bearer (Data Radio Bearer, DRB). Because both the SRB1 and the SRB2 belong to a signaling radio bearer, the SRB1 is used for RRC message transmission, and the SRB2 is used for non-access stratum (Non-Access Stratum, NAS) message transmission. Because the DRB belongs to a data radio bearer, the DRB is used for UE service data transmission.

In multimedia telephone communication (Multimedia Telephone Communication, MTC) type communication, because a quantity or a size of a transmitted data packet is relatively small, if a service setup process in an existing LTE system is still used, a large quantity of signaling overheads are caused, but actually a small quantity of small data packets are transmitted.

To reduce signaling overheads brought by the service setup process in the LTE system, in the prior art, a small data packet is encapsulated in a non-access stratum (Non-Access Stratum, NAS) message, and the NAS message is transmitted by using a signaling radio bearer (Signaling Radio Bearer, SRB). However, a base station cannot distinguish whether user equipment (User Equipment, UE) transmits an NAS message or a small data packet, which reduces accuracy of scheduling the UE by the base station to perform transmission and affects system performance.

### SUMMARY

Embodiments of the present invention provide a small data packet transmission method, a base station, and user equipment, which implement that a radio bearer specially used for small data packet transmission of the user equipment is set up in a process of setting up a radio bearer used for RRC message transmission between the user equipment and the base station, so that a large quantity of signaling overheads caused by small data packet transmission in a service setup process in an existing LTE system are reduced, and when the user equipment sends a small data packet to the base station, the base station can more accurately identify a type of a data packet transmitted by the user equipment and a data volume of a to-be-transmitted data packet.

According to a first aspect, an embodiment of the present invention provides a small data packet transmission method, including:
receiving, by a base station, a radio resource control RRC connection request sent by user equipment, where the RRC connection request includes first indication information, and the first indication information is used to indicate, to the base station, small data packet transmission;
sending, by the base station, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
receiving, by the base station, an RRC setup complete message sent by the user equipment by using the first RB; and
performing, by the base station, the small data packet transmission to the user equipment by using the second RB.

With reference to the first aspect, in a first implementation manner, after the receiving, by the base station, an RRC setup complete message sent by the user equipment, the method further includes:
performing, by the base station, the small data packet transmission to a core network device by using a first S1 bearer between the base station and the core network device, where the first S1 bearer is set up by the user equipment for completing transmission of another radio bearer message before the user equipment sends the uplink small data packet.

With reference to the first implementation manner, in a second implementation manner,
the performing, by the base station, the small data packet transmission to a core network device by using a first S1 bearer between the base station and the core network device includes: transmitting, by the base station, a data packet to the core network device by using the first S1 bearer, where the data packet carries second indication information, and the second indication information is used to indicate that the data packet is a small data packet.

With reference to the second implementation manner, in a third implementation manner, the small data packet transmission is transmitting a downlink small data packet by the base station to the user equipment; and
the performing, by the base station, the small data packet transmission to the user equipment by using the second RB includes: transmitting, by the base station, the downlink small data packet to the user equipment according to the second indication information and by using the second RB.

With reference to the first aspect, in a fourth implementation manner, after the receiving, by the base station, an RRC setup complete message sent by the user equipment, the method further includes: sending, by the base station to the core network device, an identifier of a second S 1 bearer set up for the small data packet transmission; and
performing, by the base station, the small data packet transmission to the core network device by using the second S 1 bearer between the base station and the core network device includes: performing, by the base station, the small data packet transmission to the core network device by using the second S 1 bearer corresponding to the identifier of the second S1 bearer.

With reference to the first aspect, the first implementation manner or the second implementation manner, the third implementation manner, or the fourth implementation manner of the first aspect, in a fifth implementation manner, after the receiving, by the base station, an RRC setup complete message sent by the user equipment, the method further includes:
sending, by the base station, third indication information to the core network device, where the third indication information is used to indicate, to the core network device, the small data packet transmission.

According to a second aspect, an embodiment of the present invention provides a small data packet transmission method, including:
sending, by user equipment, a radio resource control RRC connection request to a base station, where the RRC connection request includes first indication information, and the first indication information is used to indicate, to the base station, small data packet transmission;
receiving, by the user equipment, an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
setting up, by the user equipment, the first RB according to the configuration information of the first RB, and setting up the second RB according to the configuration information of the second RB;
sending, by the user equipment, an RRC setup complete message to the base station by using the first RB; and
performing, by the user equipment, the small data packet transmission to the base station by using the second RB.

With reference to the second aspect, in a first implementation manner, the small data packet transmission is transmitting a downlink small data packet by the base station to the user equipment; or the small data packet transmission is transmitting an uplink small data packet by the user equipment to the base station.

According to a third aspect, an embodiment of the present invention further provides a base station, and the base station includes:
a first receiving module, configured to receive a radio resource control RRC connection request sent by user equipment, where the RRC connection request includes first indication information, and the first indication information is used to indicate, to the base station, small data packet transmission;
a control module, configured to control a sending module to execute a sending operation, and configured to control a communications module to execute a communication operation;
the sending module, configured to send, under control of the control module, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
a second receiving module, configured to receive an RRC setup complete message sent by the user equipment by using the first RB; and
the communications module, configured to perform, under control of the control module, the small data packet transmission to the user equipment by using the second RB.

With reference to the third aspect, in a first implementation manner,
the communications module is specifically configured to perform, under control of the control module, the small data packet transmission to a core network device by using a first S 1 bearer between the base station and the core network device, where the first S 1 bearer is set up by the user equipment for completing transmission of another radio bearer message before the user equipment sends the uplink small data packet.

With reference to the first implementation manner, in a second implementation manner,
the communications module is specifically configured to transmit a data packet to the core network device by using the first S1 bearer, where the data packet carries second indication information, and the second indication information is used to indicate that the data packet is a small data packet.

With reference to the second implementation manner, in a third implementation manner, the small data packet transmission is transmitting a downlink small data packet by the base station to the user equipment; and
the communications module is specifically configured to transmit the downlink small data packet to the user equipment according to the second indication information and by using the second RB.

With reference to the third aspect, in a fourth implementation manner, the sending module is further configured to send, to the core network device under control of the control module, an identifier of a second S1 bearer set up for the small data packet transmission; and
the communications module is specifically configured to perform the small data packet transmission to the core network device by using the second S1 bearer corresponding to the identifier of the second S 1 bearer.

With reference to the third aspect, the first implementation manner, the second implementation manner, the third implementation manner, or the fourth implementation manner of the third aspect, in a fifth implementation manner,
the sending module is further configured to send, under control of the control module, third indication information to the core network device, where the third indication information is used to indicate, to the core network device, the small data packet transmission.

According to a fourth aspect, an embodiment of the present invention further provides user equipment, and the user equipment includes:
a control module, configured to control a first sending module and a second sending module to execute a sending operation, configured to control a setup module to execute a setup operation, and configured to control a communications module to execute a communication operation;
the first sending module, configured to send, under control of the control module, a radio resource control RRC connection request to a base station, where the RRC connection request includes first indication information, and the first indication information is used to indicate, to the base station, small data packet transmission;
a receiving module, configured to receive an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
the setup module, configured to set up the first RB according to the configuration information of the first RB, and set up the second RB according to the configuration information of the second RB;
the second sending module, further configured to send, under control of the control module, an RRC setup complete message to the base station by using the first RB; and
the communications module, configured to perform, under control of the control module, the small data packet transmission to the base station by using the second RB.

With reference to the fourth aspect, in a first implementation manner, the small data packet transmission is transmitting a downlink small data packet by the base station to the user equipment; or the small data packet transmission is transmitting an uplink small data packet by the user equipment to the base station.

According to a fifth aspect, an embodiment of the present invention further provides a base station, including: a transceiver, a processor, and a memory, where
the memory is configured to store an instruction;
the processor is configured to run the instruction in the memory, so as to control the transceiver to execute a sending operation;
the transceiver is configured to receive a radio resource control RRC connection request sent by user equipment, where the RRC connection request includes first indication information, and the first indication information is used to indicate, to the base station, small data packet transmission;
the transceiver is configured to send, under control of the processor, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
the transceiver is further configured to receive an RRC setup complete message sent by the user equipment by using the first RB; and
the transceiver is further configured to perform, under control of the processor, the small data packet transmission to the user equipment by using the second RB.

With reference to the fifth aspect, in a first implementation manner,
the transceiver is specifically configured to perform the small data packet transmission to a core network device by using a first S1 bearer between the base station and the core network device, where the first S 1 bearer is set up by the user equipment for completing transmission of another radio bearer message before the user equipment sends the uplink small data packet.

With reference to the first implementation manner, in a second implementation manner,
the transceiver is specifically configured to transmit a data packet to the core network device by using the first S1 bearer, where the data packet carries second indication information, and the second indication information is used to indicate that the data packet is a small data packet.

With reference to the second implementation manner, in a third implementation manner, the small data packet transmission is transmitting a downlink small data packet by the base station to the user equipment; and
the transceiver is specifically configured to transmit, under control of the processor, the downlink small data packet to the user equipment according to the second indication information and by using the second RB.

With reference to the fifth aspect, in a fourth implementation manner, the transceiver is further configured to send, to the core network device under control of the processor, an identifier of a second S1 bearer set up for the small data packet transmission; and
the transceiver is specifically configured to perform the small data packet transmission to the core network device by using an S1 bearer corresponding to the identifier of the second S1 bearer.

With reference to the fifth aspect, the first implementation manner, the second implementation manner, the third implementation manner, or the fourth implementation manner of the fifth aspect, in a fifth implementation manner,
the transceiver is further configured to send, under control of the processor, third indication information to the core network device, where the third indication information is used to indicate, to the core network device, the small data packet transmission.

According to a sixth aspect, an embodiment of the present invention further provides user equipment, including: a transceiver, a processor, and a memory, where
the memory is configured to store an instruction;
the processor is configured to run the instruction in the memory, so as to control the transceiver to execute a sending operation;
the transceiver is configured to send, under control of the processor, a radio resource control RRC connection request to a base station, where the RRC connection request includes first indication information, and the first indication information is used to indicate, to the base station, small data packet transmission;
the transceiver is configured to receive an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
the processor is further configured to run the instruction in the memory, so as to set up the first RB according to the configuration information of the first RB, and set up the second RB according to the configuration information of the second RB;
the transceiver is further configured to send, under control of the processor, an RRC setup complete message to the base station by using the first RB; and
the transceiver is further configured to perform, under control of the processor, the small data packet transmission to the base station by using the second RB.

With reference to the sixth aspect, in a first implementation manner,
the small data packet transmission is transmitting a downlink small data packet by the base station to the user equipment, or the small data packet transmission is transmitting an uplink small data packet by the user equipment to the base station.

According to the small data packet transmission method, the base station, and the user equipment provided in the embodiments of the present invention, the base station receives a radio resource control RRC connection request sent by the user equipment, where the RRC connection request includes first indication information, and the first indication information is used to indicate, to the base station, small data packet transmission; the base station sends an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB; the base station receives an RRC setup complete message sent by the user equipment by using the first RB; and the base station performs the small data packet transmission to the user equipment by using the second RB. Because the second RB specially used for the small data packet transmission of the user equipment is set up in a process of setting up the first RB used for the RRC message transmission between the user equipment and the base station, a large quantity of signaling overheads caused by small data packet transmission performed in a service setup process in an existing LTE system are reduced. Because the second RB is specially used to transmit an uplink small data packet or a downlink small data packet, the base station can accurately identify a type of a data packet transmitted by the user equipment and a data volume of a to-be-transmitted data packet, which improves accuracy of scheduling the UE by the base station to perform transmission and improves system performance.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a small data packet transmission method according to the present invention;
FIG. 2 is a flowchart of another embodiment of a small data packet transmission method according to the present invention;
FIG. 3 is a flowchart of a first embodiment of a small data packet transmission method in which network elements interact with each other according to the present invention;
FIG. 4 is a flowchart of a second embodiment of a small data packet transmission method in which network elements interact with each other according to the present invention;
FIG. 5 is a flowchart of a third embodiment of a small data packet transmission method in which network elements interact with each other according to the present invention;
FIG. 6 is a flowchart of a fourth embodiment of a small data packet transmission method in which network elements interact with each other according to the present invention;
FIG. 7 is a schematic structural diagram of an embodiment of a base station according to the present invention;
FIG. 8 is a schematic structural diagram of another embodiment of a base station according to the present invention;
FIG. 9 is a schematic structural diagram of an embodiment of user equipment according to the present invention;
FIG. 10 is a schematic structural diagram of another embodiment of user equipment according to the present invention;
FIG. 11 is a schematic structural diagram of still another embodiment of a base station according to the present invention; and
FIG. 12 is a schematic structural diagram of still another embodiment of user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, specifically including: a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Access, ) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

User equipment involved in this application may be a wireless terminal. The wireless terminal may refer to a device that provides a user with voice and/or data connectivity, a handheld device with a radio connection function, or another processing device connected to a radio modem. The wireless terminal may communicate with one or more core networks through a radio access network (RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A base station (for example, an access point) involved in this application may refer to a device that is in an access network and communicates with a wireless terminal via one or more sectors over an air interface. The base station may be configured to mutually convert a received over-the-air frame and an IP packet and serve as a router between the wireless terminal and a rest portion of the access network, where the rest portion of the access network may include an Internet Protocol (IP) network. The base station may further coordinate attribute management of the air interface. For example, the base station may be a base station (BTS, Base Transceiver Station) in GSM or CDMA, may be a base station (NodeB) in WCDMA, or may be an evolved NodeB (NodeB, eNB, or e-NodeB, evolved Node B) in LTE, which is not limited in the this application.

A core network device involved in this application may be a network element such as a mobility management entity (MME, Mobility Management Entity) or a serving GPRS support node (SGSN, Serving GPRS SUPPORT NODE).

A small data packet involved in this application includes a heartbeat packet, a message pushed by a server, data sent by a user, a refreshed user status, which is not limited in this application.

The small data packet mentioned in this application is only a specific example, and the method of the present invention may be applicable to another data transmission situation.

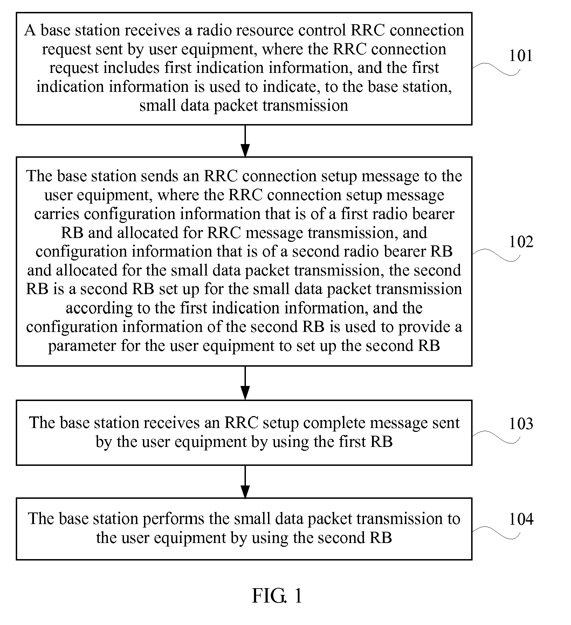

FIG. 1 is a flowchart of an embodiment of a small data packet transmission method according to the present invention. As shown in FIG. 1, the small data packet transmission method on a base station side may include:
Step 101: A base station receives a radio resource control RRC connection request sent by user equipment, where the RRC connection request includes first indication information, and the first indication information is used to indicate, to the base station, small data packet transmission.
   In this embodiment of the present invention, in a scenario in which the user equipment needs to transmit a small data packet, the first indication information may be carried in the RRC connection request to indicate to the base station that the user equipment needs to transmit the small data packet. The first indication information may be specifically a cause value, added to a setup cause in an RRC connection request message, for indicating the small data packet transmission; or a new information element, added to an RRC connection request message, for indicating the small data packet transmission; or a new control unit, added to a Media Access Control layer protocol data unit (Media Access Control Protocol Data Unit, MAC PDU) in which an RRC connection request message is encapsulated, for indicating the small data packet transmission; or a reserved bit, in a MAC PDU in which an RRC connection request message is encapsulated, for indicating the small data packet transmission, which is not limited in the present invention.
Step 102: The base station sends an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.
   In this embodiment, the base station provides, by adding configuration information of a radio bearer (Radio Bearer, RB) to the RRC connection setup message, a parameter for the user equipment to set up the RB. The RRC connection setup message carries two pieces of configuration information of RBs. One is the configuration information that is of the first RB and allocated for the RRC message transmission, where the first RB is an SRB, for example, an SRB1. The other is the configuration information that is of the second RB and allocated to the user equipment to specially perform the small data packet transmission, where the second RB may be an SRB, for example, an SRB3, a DRB, or another type RB, which is not limited in this embodiment.
   The configuration information of the first RB is configuration information required for setting up an RB for the RRC message transmission in the prior art, and details are not described herein.
   The configuration information of the second RB is specifically used by the base station to configure a radio parameter for a dedicated radio bearer RB set up for the small data packet transmission of the user equipment. By using a user-defined SRB3 as an example, the radio parameter may be one parameter or a combination of multiple parameters of the following parameters: an RB identifier of the SRB3; an RLC mode, for example, a UM, an AM, or a TM; a parameter such as an RLC direction, for example, one-way or two-way; a logic channel identifier, for example, a logic channel priority, a logic channel prioritized bit rate, a bucket size parameter, and an identifier of a logic channel organization to which the logic channel belongs; a PDCP configuration parameter, for example, a parameter related to a discard timer, a requirement for sending a status report, or header compression; and the like. The radio parameters may be always configured by the base station, formulated according to a protocol, or obtained by the base station by using another node, which is not limited in this embodiment.
   A configuration parameter of the second RB is configured according to a QoS requirement of a to-be-transmitted small data packet. Generally, a priority of a small data packet to be transmitted by using the second RB is lower than a priority of an RRC message or an NAS message to be transmitted by using another RB, has a lower delay requirement, or the like, and therefore the base station can distinguish between the small data packet and both the RRC message and the NAS message by using an independent second RB. Especially when the base station has relatively heavy load, the base station may delay transmitting a small data packet on the second RB.
Step 103: The base station receives an RRC setup complete message sent by the user equipment by using the first RB.
Step 104: The base station performs the small data packet transmission to the user equipment by using the second RB.

In this embodiment, that the base station performs the small data packet transmission to the user equipment by using the second RB includes: directly transmitting an uplink small data packet or a downlink small data packet between the user equipment and the base station by using the second RB.

According to the small data packet transmission method provided in this embodiment, a base station receives a radio resource control RRC connection request sent by user equipment, where the RRC connection request includes first indication information, and the first indication information is used to indicate, to the base station, small data packet transmission; the base station sends an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB; the base station receives an RRC setup complete message sent by the user equipment by using the first RB; and the base station performs the small data packet transmission to the user equipment by using the second RB. Because the second RB specially used for the small data packet transmission of the user equipment is set up in a process of setting up the first RB used for the RRC message transmission between the user equipment and the base station, a large quantity of signaling overheads caused by small data packet transmission performed in a service setup process in an existing LTE system are reduced. Because the second RB is specially used to transmit an uplink small data packet or a downlink small data packet, the base station can accurately identify a type of a data packet transmitted by the user equipment and a data volume of a to-be-transmitted data packet, which improves accuracy of scheduling the UE by the base station to perform transmission and improves system performance.

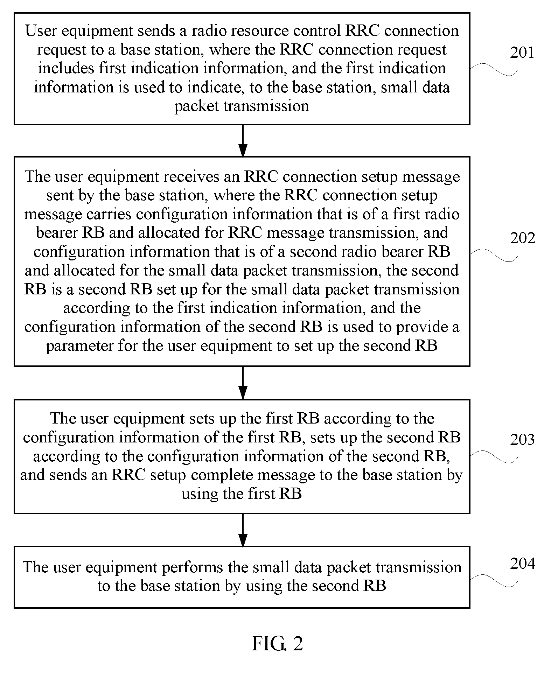

FIG. 2 is a flowchart of another embodiment of a small data packet transmission method according to the present invention. As shown in FIG. 2, the small data packet transmission method on a user equipment side may include:
Step 201: User equipment sends a radio resource control RRC connection request to a base station, where the RRC connection request includes first indication information, and the first indication information is used to indicate, to the base station, small data packet transmission.
   In this embodiment, in a scenario in which the user equipment needs to transmit a small data packet, the first indication information may be carried in the RRC connection request to indicate to the base station that the user equipment needs to transmit the small data packet. The first indication information may be specifically a cause value, added to a setup cause in an RRC connection request message, for indicating the small data packet transmission; or a new information element, added to an RRC connection request message, for indicating the small data packet transmission; or a new control unit, added to a Media Access Control layer protocol data unit (Media Access Control Protocol Data Unit, MAC PDU) in which an RRC connection request message is encapsulated, for indicating the small data packet transmission; or a reserved bit, in a MAC PDU in which an RRC connection request message is encapsulated, for indicating the small data packet transmission, which is not limited in the present invention.
Step 202: The user equipment receives an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.
   In this embodiment, the base station provides, by adding configuration information of an RB to the RRC connection setup message, a parameter for the user equipment to set up the RB. The RRC connection setup message carries two pieces of configuration information of RBs. One is the configuration information that is of the first RB and allocated for the RRC message transmission, where the first RB is an SRB, for example, an SRB1. The other is the configuration information that is of the second RB and allocated to the user equipment to specially perform the small data packet transmission, where the second RB may be an SRB, for example, an SRB3, a DRB, or another type RB, which is not limited in this embodiment.
   The configuration information of the first RB is configuration information required for setting up an RB for the RRC message transmission in the prior art, and details are not described herein.
   The configuration information of the second RB is specifically used by the base station to configure a radio parameter for a dedicated radio bearer RB set up for the small data packet transmission of the user equipment. By using a user-defined SRB3 as an example, the radio parameter may be one parameter or a combination of multiple parameters of the following parameters: an RB identifier of the SRB3; an RLC mode, for example, a UM, an AM, or a TM; a parameter such as an RLC direction, for example, one-way or two-way; a logic channel identifier, for example, a logic channel priority, a logic channel prioritized bit rate, a bucket size parameter, and an identifier of a logic channel organization to which the logic channel belongs; a PDCP configuration parameter, for example, a parameter related to a discard timer, a requirement for sending a status report, or header compression; and the like. The radio parameters may be always configured by the base station, formulated according to a protocol, or obtained by the base station by using another node, which is not limited in this embodiment.
   A configuration parameter of the second RB is configured according to a QoS requirement of a to-be-transmitted small data packet. Generally, a priority of a small data packet to be transmitted by using the second RB is lower than a priority of an RRC message or an NAS message to be transmitted by using another RB, has a lower delay requirement, or the like, and therefore the base station can distinguish between the small data packet and both the RRC message and the NAS message by using an independent second RB. Especially when the base station has relatively heavy load, the base station may delay transmitting a small data packet on the second RB.
Step 203: The user equipment sets up the first RB according to the configuration information of the first RB, sets up the second RB according to the configuration information of the second RB, and sends an RRC setup complete message to the base station by using the first RB.
   In this embodiment, the set up first RB is used for RRC message transmission, and the set up second RB is specially used for small data packet transmission.
Step 204: The user equipment performs the small data packet transmission to the base station by using the second RB.

In this embodiment, that the user equipment performs the small data packet transmission to the base station by using the second RB includes: directly transmitting an uplink small data packet or a downlink small data packet between the user equipment and the base station by using the second RB.

According to the small data packet transmission method provided in this embodiment, user equipment sends a radio resource control RRC connection request to a base station, where the RRC connection request includes first indication information, and the first indication information is used to indicate, to the base station, small data packet transmission; the user equipment receives an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB; the user equipment sets up the first RB according to the configuration information of the first RB and sets up the second RB according to the configuration information of the second RB; the user equipment sends an RRC setup complete message to the base station by using the first RB; and the user equipment performs the small data packet transmission to the base station by using the second RB. Because the second RB specially used for the small data packet transmission of the user equipment is set up in a process of setting up the first RB used for the RRC message transmission between the user equipment and the base station, a large quantity of signaling overheads caused by small data packet transmission performed in a service setup process in an existing LTE system are reduced. Because the second RB is specially used to transmit an uplink small data packet or a downlink small data packet, the base station can accurately identify a type of a data packet transmitted by the user equipment and a data volume of a to-be-transmitted data packet, which improves accuracy of scheduling the UE by the base station to perform transmission and improves system performance.

In a first to a fourth embodiments of a small data packet transmission method in which network elements interact with each other in the present invention, a first RB is an SRB, a second RB may be an SRB or a DRB, and therefore in the following first to fourth embodiments, that the first RB is a user-defined SRB1 and the second RB is a user-defined SRB3 is used as an example for description.

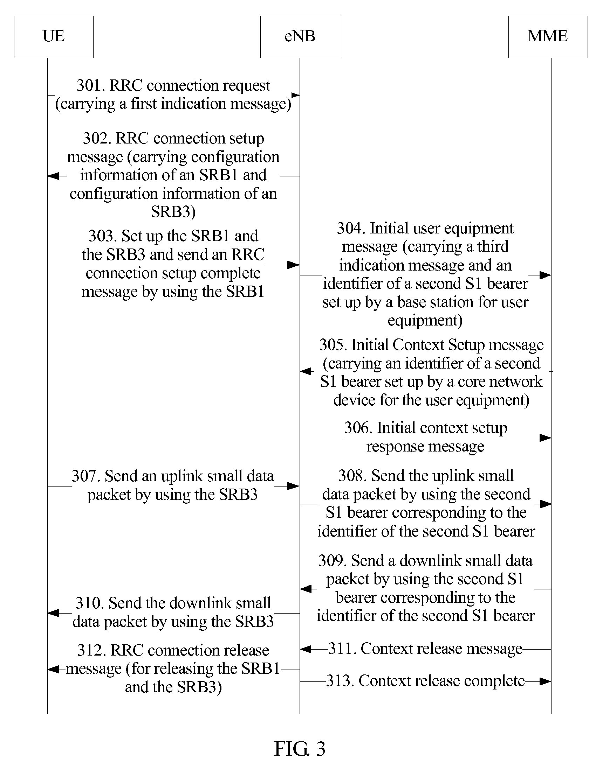

FIG. 3 is a flowchart of a first embodiment of a small data packet transmission method in which network elements interact with each other according to the present invention. As shown in FIG. 3, based on implementation scenarios shown in FIG. 1 and FIG. 2, this embodiment further provides an implementation manner of newly setting up, between a base station and a core network device, a second S1 bearer corresponding to the second RB, and the method may include:
Step 301: User equipment sends an RRC connection request to the base station, where the RRC connection request includes first indication information, and the first indication information is used to indicate, to the base station, small data packet transmission.
   In this embodiment, in a scenario in which the user equipment needs to transmit a small data packet, the first indication information may be carried in the RRC connection request to indicate to the base station that the user equipment needs to transmit the small data packet. The first indication information may be specifically a cause value, added to a setup cause in an RRC connection request message, for indicating the small data packet transmission; or a new information element, added to an RRC connection request message, for indicating the small data packet transmission; or a new control unit, added to a Media Access Control layer protocol data unit (Media Access Control Protocol Data Unit, MAC PDU) in which an RRC connection request message is encapsulated, for indicating the small data packet transmission; or a reserved bit, in a MAC PDU in which an RRC connection request message is encapsulated, for indicating the small data packet transmission, which is not limited in the present invention.
Step 302: After receiving the RRC connection request sent by the user equipment, the base station sends an RRC connection setup message to the user equipment, where the RRC connection setup message carries configuration information that is of a first radio bearer RB and allocated for RRC message transmission, and configuration information that is of a second radio bearer RB and allocated for the small data packet transmission.
   In this embodiment, the first RB is an SRB, and the second RB may be an SRB or a DRB. In this embodiment, that the first RB is customized as an SRB1 and the second RB is customized as an SRB3 is used as an example for description.
   Configuration information of the SRB1 is configuration information required for setting up the SRB1 for the RRC message transmission in the prior art, and details are not described herein.
   Configuration information of the SRB3 has been described in an embodiment of the small data packet transmission method in the present invention, and details are not described herein.
Step 303: After receiving the RRC connection setup message sent by the base station, the user equipment sets up an SRB1 and an SRB3 bearer according to configuration information of the SRB1 and configuration information of the SRB3 that are in the RRC connection setup message, and sends an RRC setup complete message to the base station by using the SRB1.
Step 304: After receiving an RRC connection setup complete message, the base station sends an initial user equipment message to the core network device, where the initial user equipment message carries a third indication message and an identifier of a second S1 bearer set up by the base station for the small data packet transmission of the user equipment.
   In this embodiment, the third indication message is used by the base station to indicate, to the core network device, the small data packet transmission. The third indication message may be a cause value, added to a setup cause in an RRC connection request message included in the initial user equipment message, for indicating the small data packet transmission, or a new information element, added to the initial user equipment message, for indicating the small data packet transmission, which is not limited in the present invention.
   The identifier of the second S1 bearer set up by the base station for the small data packet transmission of the user equipment may be denoted as eNB_UE_S1AP_ID2, and the identifier is used to uniquely identify the second S1 bearer of the UE on a base station side.
   The second S 1 bearer is an S 1 bearer newly set up for small data packet transmission between the base station and the core network device.
Step 305: The core network device sends an Initial Context Setup message to the base station, where the message carries an identifier of a second S1 bearer set up by the core network device for the small data packet transmission of the user equipment.
   The identifier of the second S1 bearer set up by the core network device for the small data packet transmission of the user equipment may be denoted as MME_UE_S1AP_ID2, and the identifier is used to uniquely identify the second S1 bearer of the UE on an MME side.
Step 306: The base station sends a context setup response message to the core network device.
   For uplink small data packet transmission, steps 307 and 308 are performed.
Step 307: The user equipment sends an uplink small data packet to the base station by using the SRB3.
Step 308: The base station sends the uplink small data packet to the core network device by using the second S 1 bearer.
   The uplink small data packet includes identifiers eNB_UE_S1AP_ID2 and MME_UE_S1AP_ID2 of the second S1 bearer.
   For downlink small data packet transmission, steps 309 and 310 are performed.
Step 309: The core network device sends a downlink small data packet to the base station by using the second S 1 bearer.
Step 310: The base station sends the downlink small data packet to the user equipment by using the SRB3.
Steps 311 to 313 are a process of releasing an RB bearer between the UE and the base station and releasing a context between the base station and the core network device after the small data packet transmission ends.
Step 311: The core network device sends a context release message to the base station to instruct the base station to release a set up channel.
Step 312: The base station sends an RRC connection release message to the user equipment, where the RRC connection release message is used to instruct to release an RB bearer.
   Released RBs bearers include both the SRB1 and the SRB3.
Step 313: The base station sends a context release complete message to the core network device, to complete a release-related operation.

In the foregoing embodiment, a dedicated radio bearer SRB3 for small data packet transmission is set up between user equipment and a base station to transmit uplink and downlink small data packets, and a second S1 bearer corresponding to the SRB3 is newly set up between the base station and a core network device to transmit the uplink and downlink small data packets, so that there is a dedicated small data packet transmission channel between the base station and the core network device. In addition, according to the entire small data packet transmission method in which network elements interact with each other in this embodiment, a large quantity of signaling overheads caused by small data packet transmission performed in a service setup process in an existing LTE system can be reduced, and the base station can more accurately identify a type of a data packet transmitted by the user equipment and a data volume of a to-be-transmitted data packet, which improves accuracy of scheduling the UE by the base station to perform transmission and improves system performance.

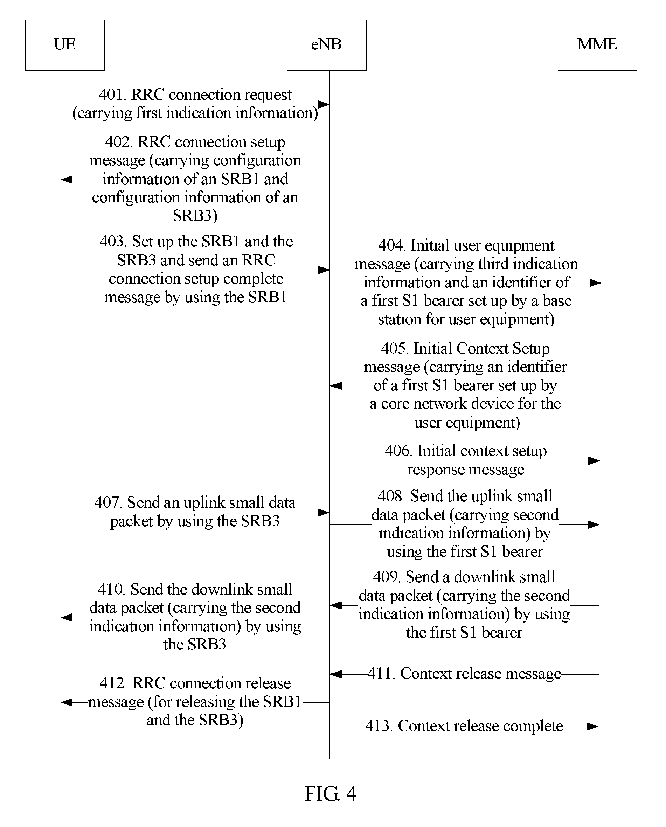

FIG. 4 is a flowchart of a second embodiment of a small data packet transmission method in which network elements interact with each other according to the present invention. As shown in FIG. 4, based on implementation scenarios shown in FIG. 1 and FIG. 2, this embodiment further provides an implementation manner of using an original first S 1 bearer between a base station and a core network and adding, to a small data packet transmitted between the base station and a core network device, second indication information used for small data packet transmission. The method may include:
Steps 401 to 403 are the same as steps 301 to 303 in the first embodiment of the small data packet transmission method in which network elements interact with each other in the present invention, and details are not described herein.
Step 404: After receiving an RRC connection setup complete message, the base station sends an initial user equipment message to the core network device, where the initial user equipment message carries a third indication message and an identifier of a first S1 bearer set up by the base station for the small data packet transmission of the user equipment.
   In this embodiment, the third indication message is used by the base station to indicate, to the core network device, the small data packet transmission. The third indication message may be a cause value, added to a setup cause in an RRC connection request message included in the initial user equipment message, for indicating the small data packet transmission, or a new information element, added to the initial user equipment message, for indicating the small data packet transmission, which is not limited in the present invention.
   The initial user equipment message may carry the third indication message, or may carry an indication message of transmitting a small data packet by using the SRB3 or an indication that can implement a similar function, for example, the message also carries information such as an RRC connection setup cause. The information is all used to indicate that the user equipment needs to transmit a small data packet.
   The identifier of the first S1 bearer set up by the base station for the small data packet transmission of the user equipment may be denoted as eNB_UE_S1AP_ID1, and the identifier is used to uniquely identify, on a base station side, the first S 1 bearer of the UE.
   The first S1 bearer is set up by the user equipment for completing transmission of another radio bearer message before the user equipment sends the uplink small data packet, for example, an S 1 bearer used to transmit an S1 interface application protocol message.
   Step 405: The core network device sends an Initial Context Setup message to the base station, where the message carries an identifier of a first S1 bearer set up by the core network device for the small data packet transmission of the user equipment.
   The identifier of the first S1 bearer set up by the core network device for the small data packet transmission of the user equipment may be denoted as MME_UE-S1AP_ID1, and the identifier is used to uniquely identify, on an MME side, the first S 1 bearer of the UE.
Step 406: The base station sends a context setup response message to the core network device.
   The foregoing steps 405 and 406 are optional. If there are no steps 405 and 406, the identifier of the first S 1 bearer set up by the core network device for the small data packet transmission of the user equipment in step 405 may be carried in the first downlink small data packet transmitted in step 409.
   After the SRB3 set up for the small data packet transmission is set up between the user equipment and the base station, and an original first S1 bearer is prepared, for the small data packet transmission of the user equipment, between the base station and the core network device, for uplink small data packet transmission, steps 407 and 408 are performed.
Step 407: The user equipment sends an uplink small data packet to the base station by using the SRB3.
Step 408: When sending the uplink small data packet to the core network device, the base station sends the uplink small data packet to the core network device by using the first S 1 bearer.
   When the base station sends the uplink small data packet to the core network device, second indication information is carried in the first transmitted small data, where the second indication information is used to indicate that a data packet transmitted by the base station to the core network device is a small data packet. Specifically, the second indication information may be an information element, added to a header of the uplink small data packet, for indicating the small data packet transmission, or a reserved bit, in a used uplink small data packet, for indicating the small data packet transmission, which is not limited in the present invention.
   For downlink small data packet transmission, steps 409 and 410 are performed.
Step 409: The core network device instructs, by using the third indication information in the initial user equipment message, an entity such as an SGW or a PGW to send a downlink small data packet to the core network device, and then the core network device sends the small data packet to the base station by using the first S 1 bearer.
   The transmitted downlink small data packet carries the second indication information, and the second indication information is used to indicate that data packet transmission is small data packet transmission, and the second indication information
   optionally carries the identifier of the first S1 bearer set up by the core network device for the user equipment during transmission of the first downlink small data.
Step 410: The base station sends the downlink small data packet to the user equipment by using the SRB3.
   In this embodiment, the base station transmits the downlink small data packet to the user equipment according to the second indication information and by using the SRB3.
Steps 411 to 413 are a process of releasing an RB bearer between the UE and the base station and releasing a context between the base station and the core network after the small data packet transmission ends.

Steps 411 to 413 are the same as steps 311 to 313 in the first embodiment of the small data packet transmission method in which network elements interact with each other in the present invention, and details are not described herein.

In the foregoing embodiment, a dedicated radio bearer SRB3 for small data packet transmission is set up between user equipment and a base station to transmit uplink and downlink small data packets, an original first S1 bearer is used between the base station and a core network device, and second indication information of the small data packet transmission is added to a small data packet transmitted by using the first S1 bearer, so that there is no need to set up a new second S 1 bearer between the base station and the core network device because of the small data packet transmission, and channel resources are saved. In addition, according to the entire small data packet transmission method in which network elements interact with each other in this embodiment, a large quantity of signaling overheads caused by small data packet transmission performed in a service setup process in an existing LTE system can be reduced, and the base station can more accurately identify a type of a data packet transmitted by the user equipment and a data volume of a to-be-transmitted data packet, which improves accuracy of scheduling the UE by the base station to perform transmission and improves system performance.

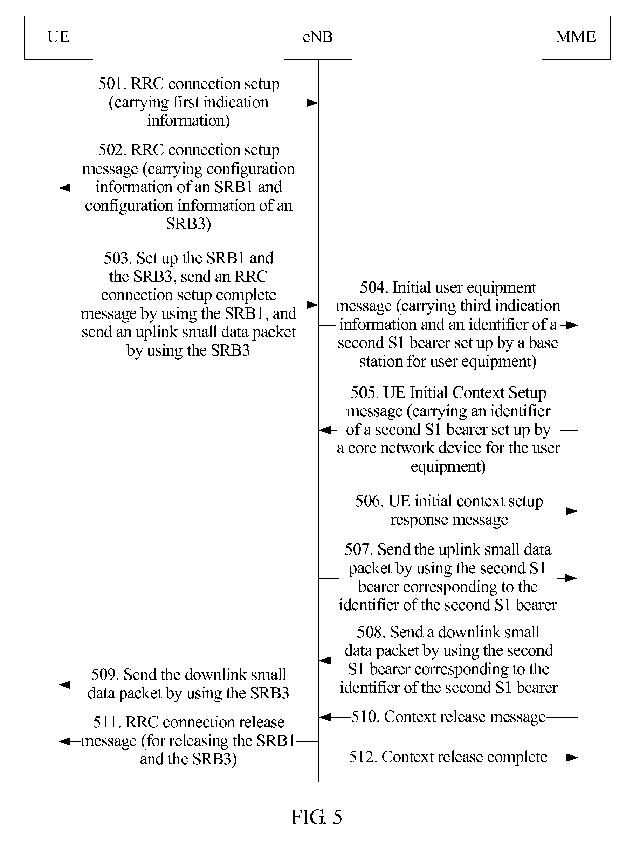

FIG. 5 is a flowchart of a third embodiment of a small data packet transmission method in which network elements interact with each other according to the present invention. As shown in FIG. 5, based on the first embodiment of the small data packet transmission method in which network elements interact with each other in the present invention, this embodiment provides an implementation manner of simultaneously performing an operation of sending an RRC connection setup complete message to a base station by user equipment by using an SRB1 and an operation of sending an uplink small data packet to the base station by the user equipment by using an SRB3, and the method may include:
Steps 501 and 502 are the same as steps 301 and 302 in the first embodiment of the small data packet transmission method in which network elements interact with each other in the present invention, and details are not described herein.
   Uplink small data packet transmission between the user equipment and the base station is performed in step 503.
Step 503: After receiving the RRC connection setup message sent by the base station, the user equipment sets up an SRB1 and an SRB3 bearer according to configuration information of the SRB1 and configuration information of the SRB3 that are in the RRC connection setup message, sends an RRC setup complete message to the base station by using the SRB1, and sends an uplink small data packet to the base station by using the SRB3.
Steps 504 to 506 are the same as steps 304 to 306 in the first embodiment of the small data packet transmission method in which network elements interact with each other in the present invention, and details are not described herein.
   Uplink small data packet transmission between the base station and the core network device is performed according to step 507.
Step 507: The base station sends the uplink small data packet to the core network device by using the second S 1 bearer.
   The uplink small data packet includes identifiers eNB_UE_S1AP_ID2 and MME_UE_S1AP_ID2 of the second S1 bearer. The second S1 bearer is an S1 bearer newly set up for small data packet transmission between the base station and the core network device.
   For downlink small data packet transmission, steps 508 and 509 are performed.
Steps 508 and 509 are the same as steps 309 and 310 in the first embodiment of the small data packet transmission method in which network elements interact with each other in the present invention, and details are not described herein.
Steps 510 to 512 are a process of releasing an RB bearer between the UE and the base station and releasing a context between the base station and the core network device after the small data packet transmission ends.
Steps 510 to 512 are the same as steps 311 to 313 in the first embodiment of the small data packet transmission method in which network elements interact with each other in the present invention, and details are not described herein.

In the foregoing embodiment, a dedicated radio bearer SRB3 for small data packet transmission is set up between user equipment and a base station to transmit uplink and downlink small data packets, and after an SRB1 and the SRB3 are set up, an operation of sending an RRC connection setup complete message to the base station by the user equipment by using the SRB1 and an operation of sending an uplink small data packet to the base station by the user equipment by using the SRB3 are simultaneously performed, which can reduce one time of communication, between the user equipment and the base station, specially for uplink small data packet transmission. In addition, a second S 1 bearer corresponding to the SRB3 is newly set up between the base station and a core network device to transmit the uplink and downlink small data packets, so that there is a dedicated small data packet transmission channel between the base station and the core network device. According to the entire small data packet transmission method in which network elements interact with each other in this embodiment, a large quantity of signaling overheads caused by small data packet transmission performed in a service setup process in an existing LTE system can be reduced, and the base station can more accurately identify a type of a data packet transmitted by the user equipment and a data volume of a to-be-transmitted data packet, which improves accuracy of scheduling the UE by the base station to perform transmission and improves system performance.

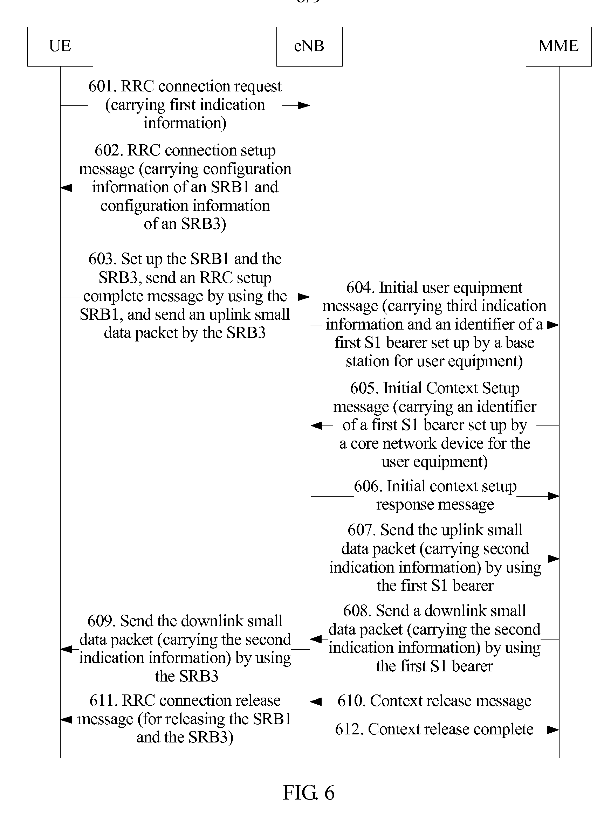

FIG. 6 is a flowchart of a fourth embodiment of a small data packet transmission method in which network elements interact with each other according to the present invention. As shown in FIG. 6, based on the second embodiment of the small data packet transmission method in which network elements interact with each other in the present invention, this embodiment provides an implementation manner of simultaneously performing an operation of sending an RRC connection setup complete message to a base station by user equipment by using an SRB1 and an operation of sending an uplink small data packet to the base station by the user equipment by using an SRB3, and the method may include:
Steps 601 and 602 are the same as steps 301 and 302 in the second embodiment of the small data packet transmission method in which network elements interact with each other in the present invention, and details are not described herein.
   Uplink small data packet transmission between the user equipment and the base station is performed in step 603.
Step 603: After receiving the RRC connection setup message sent by the base station, the user equipment sets up an SRB 1 and an SRB3 bearer according to configuration information of the SRB1 and configuration information of the SRB3 that are in the RRC connection setup message, sends an RRC setup complete message to the base station by using the SRB1, and sends an uplink small data packet to the base station by using the SRB3.
Steps 604 to 606 are the same as steps 404 to 406 in the second embodiment of the small data packet transmission method in which network elements interact with each other in the present invention, and details are not described herein.
   In this embodiment, the foregoing steps 605 and 606 are optional. If there are no steps 605 and 606, the identifier of the first S1 bearer set up by the core network device for the small data packet transmission of the user equipment in step 605 may be carried in the first downlink small data transmitted in step 608.
   Uplink small data packet transmission between the base station and the core network device is performed according to step 607.
Step 607: When sending the uplink small data packet to the core network device, the base station sends the uplink small data packet to the core network device by using the first S 1 bearer.
   For downlink small data packet transmission, steps 608 and 609 are performed.
Steps 608 and 609 are the same as steps 409 and 410 in the second embodiment of the small data packet transmission method in which network elements interact with each other in the present invention, and details are not described herein.
Steps 610 to 612 are a process of releasing an RB bearer between the UE and the base station and releasing a context between the base station and the core network device after the small data packet transmission ends.
Steps 610 to 612 are the same as steps 311 to 313 in the first embodiment of the small data packet transmission method in which network elements interact with each other in the present invention, and details are not described herein.

In the foregoing embodiment, a dedicated radio bearer for small data packet transmission is set up between user equipment and a base station to transmit uplink and downlink small data packets, and after an SRB 1 and an SRB3 are set up, an operation of sending an RRC connection setup complete message to the base station by the user equipment by using the SRB1 and an operation of sending an uplink small data packet to the base station by the user equipment by using the SRB3 are simultaneously performed, which can reduce one time of communication, between the user equipment and the base station, specially for uplink small data packet transmission. In addition, an original second S1 bearer is used between the base station and a core network device, which saves channel resources. In addition, according to the entire small data packet transmission method in which network elements interact with each other in this embodiment, a large quantity of signaling overheads caused by small data packet transmission performed in a service setup process in an existing LTE system can be reduced, and the base station can more accurately identify a type of a data packet transmitted by the user equipment and a data volume of a to-be-transmitted data packet, which improves accuracy of scheduling the UE by the base station to perform transmission and improves system performance.

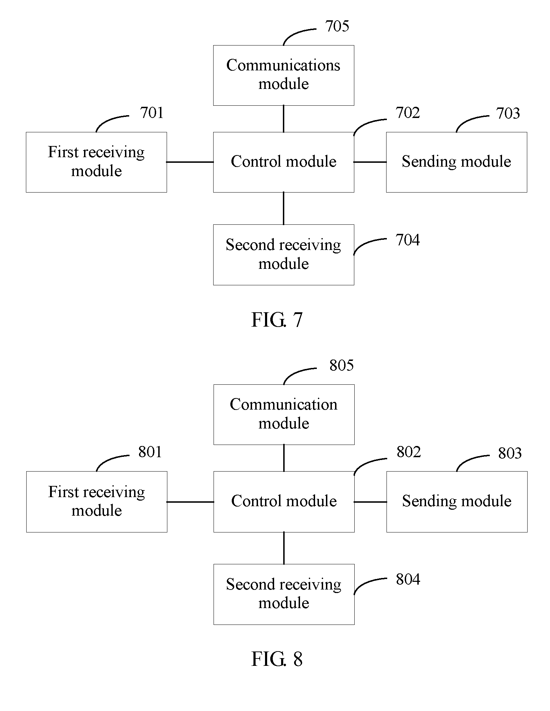

FIG. 7 is a schematic structural diagram of an embodiment of a base station according to the present invention. The base station in this embodiment may implement a process of the embodiment shown in FIG. 1 of the present invention. As shown in FIG. 7, the base station may include: a first receiving module 701, a control module 702, a sending module 703, a second receiving module 704, and a communications module 705.

The first receiving module 701 is configured to receive a radio resource control RRC connection request sent by user equipment, where the RRC connection request includes first indication information, and the first indication information is used to indicate, to the base station, small data packet transmission.

The control module 702 is configured to control the sending module to execute a sending operation, and configured to control the communications module to execute a communication operation.

The sending module 703 is configured to send, under control of the control module, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The second receiving module 704 is configured to receive an RRC setup complete message sent by the user equipment by using the first RB.

The communications module 705 is configured to perform, under control of the control module 702, the small data packet transmission to the user equipment by using the second RB.

The apparatus in this embodiment may be configured to execute the technical solution in the method embodiment shown in FIG. 1, implementation principles and technical effects thereof are similar, and details are not described herein.

FIG. 8 is a schematic structural diagram of another embodiment of a base station according to the present invention. As shown in FIG. 8, the base station in this embodiment may implement technical solutions on a base station side of the embodiments shown in FIG. 3 to FIG. 6 of the present invention. As shown in FIG. 8, the base station may include: a first receiving module 801, a control module 802, a sending module 803, a second receiving module 804, and a communications module 805.

The first receiving module 801 is configured to receive a radio resource control RRC connection request sent by user equipment, where the RRC connection request includes first indication information, and the first indication information is used to indicate, to the user equipment, small data packet transmission.

The control module 802 is configured to control the sending module 803 to execute a sending operation, and control the communications module 805 to execute a communication operation.

The sending module 803 is configured to send, under control of the control module 802, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The second receiving module 804 is configured to receive an RRC setup complete message sent by the user equipment by using the first RB.

The communications module 805 is configured to perform, under control of the control module 802, the small data packet transmission to the user equipment by using the second RB.

Further, the communications module 805 is specifically configured to perform, under control of the control module 802, the small data packet transmission to a core network device by using a first S 1 bearer between the base station and the core network device, where the first S1 bearer is set up by the user equipment for completing transmission of another radio bearer message before the user equipment sends an uplink small data packet.

Further, the communications module 805 is specifically configured to transmit a data packet to the core network device by using the first S1 bearer, where the data packet carries second indication information, and the second indication information is used to indicate that the data packet is a small data packet.

The small data packet transmission is transmitting a downlink small data packet by the base station to the user equipment.

Further, the communications module 805 is specifically configured to transmit the downlink small data packet to the user equipment according to the second indication information and by using the second RB.

Alternatively, the sending module 803 is further configured to send, to the core network device under control of the control module 802, an identifier of a second S1 bearer set up for the small data packet transmission.

Alternatively, the communications module 805 is specifically configured to perform the small data packet transmission to the core network device by using the second S 1 bearer corresponding to the identifier of the second S 1 bearer.

Further, the sending module 803 is further configured to send, under control of the control module 802, third indication information to the core network device, where the third indication information is used to indicate, to the core network device, the small data packet transmission.

The apparatus in this embodiment may be configured to execute the technical solutions on the base station side in the method embodiments shown in FIG. 3 to FIG. 6, implementation principles and technical effects thereof are similar, and details are not described herein.

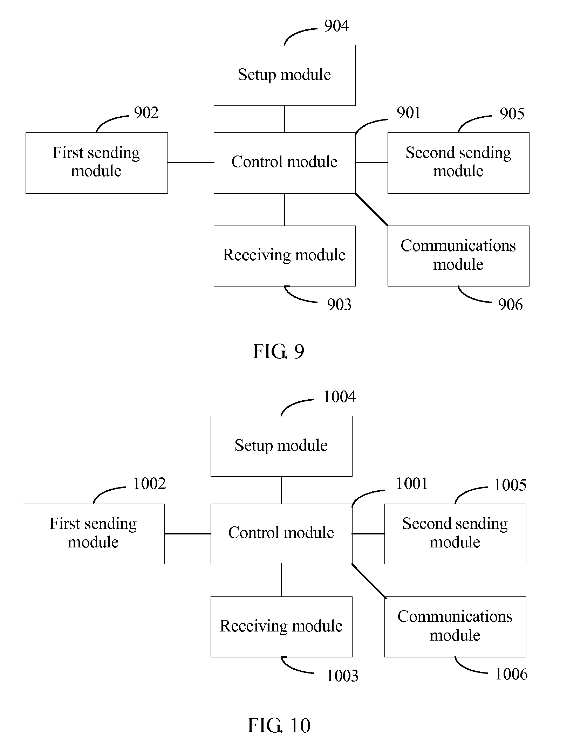

FIG. 9 is a schematic structural diagram of an embodiment of user equipment according to the present invention. The user equipment in this embodiment may implement a process of the embodiment shown in FIG. 2 of the present invention. As shown in FIG. 9, the user equipment may include: a control module 901, a first sending module 902, a receiving module 903, a setup module 904, a second sending module 905, and a communications module 906.

The control module 901 is configured to control the first sending module 902 and the second sending module 905 to execute a sending operation, configured to control the setup module 904 to execute a setup operation, and configured to control the communications module 906 to execute a communication operation.

The first sending module 902 is configured to send, under control of the control module 901, a radio resource control RRC connection request to a base station, where the RRC connection request includes first indication information, and the first indication information is used to indicate, to the base station, small data packet transmission.

The receiving module 903 is configured to receive an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The setup module 904 is configured to set up the first RB according to the configuration information of the first RB, and set up the second RB according to the configuration information of the second RB.

The second sending module 905 is configured to send, under control of the control module 901, an RRC setup complete message to the base station by using the first RB.

The communications module 906 is configured to perform, under control of the control module 901, the small data packet transmission to the base station by using the second RB.

The apparatus in this embodiment may be configured to execute the technical solution in the method embodiment shown in FIG. 2, implementation principles and technical effects thereof are similar, and details are not described herein.

FIG. 10 is a schematic structural diagram of another embodiment of user equipment according to the present invention. As shown in FIG. 10, the user equipment in this embodiment may implement technical solutions on a user equipment side of the embodiments shown in FIG. 3 to FIG. 6 of the present invention, and the user equipment may include: a control module 1001, a first sending module 1002, a receiving module 1003, a setup module 1004, a second sending module 1005, and a communications module 1006.

The control module 1001 is configured to control the first sending module 1002 and the second sending module 1005 to execute a sending operation, configured to control the setup module 1004 to execute a setup operation, and configured to control the communications module 1006 to execute a communication operation.

The first sending module 1002 is configured to send, under control of the control module 1001, a radio resource control RRC connection request to a base station, where the RRC connection request includes first indication information, and the first indication information is used to indicate, to the base station, small data packet transmission.

The receiving module 1003 is configured to receive an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The setup module 1004 is configured to set up the first RB according to the configuration information of the first RB, and set up the second RB according to the configuration information of the second RB.

The second sending module 1005 is configured to send, under control of the control module 1001, an RRC setup complete message to the base station by using the first RB.

The communications module 1006 is configured to perform, under control of the control module 1001, the small data packet transmission to the base station by using the second RB.

Further, that the communications module 1006 performs the small data packet transmission to the base station by using the second RB is specifically: the small data packet transmission is transmitting a downlink small data packet by the base station to the user equipment; or the small data packet transmission is transmitting an uplink small data packet by the user equipment to the base station.

The apparatus in this embodiment may be configured to execute the technical solutions on the user equipment side in the method embodiments shown in FIG. 3 to FIG. 6, implementation principles and technical effects thereof are similar, and details are not described herein.

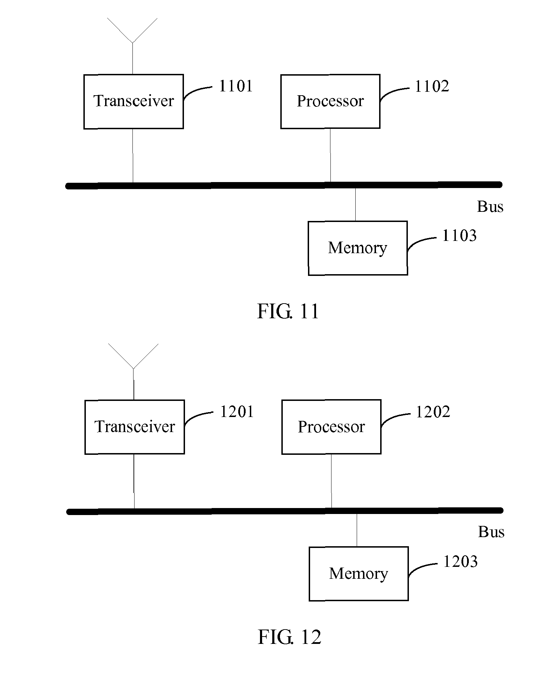

FIG. 11 is a schematic structural diagram of still another embodiment of a base station according to the present invention. As shown in FIG. 11, the base station may include: a transceiver 1101, a processor 1102, and a memory 1103, and the transceiver 1101, the processor 1102, and the memory 1103 communicate by using a bus.

The memory 1103 is configured to store an instruction.

The processor 1102 is configured to run the instruction in the memory 1103 to control the transceiver 1101 to execute a sending operation.

The transceiver 1101 is configured to receive a radio resource control RRC connection request sent by user equipment, where the RRC connection request includes first indication information, and the first indication information is used to indicate, to the base station, small data packet transmission.

The transceiver 1101 is configured to send, under control of the processor 1102, an RRC connection setup message to the user equipment, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The transceiver 1101 is further configured to receive an RRC setup complete message sent by the user equipment by using the first RB.

The transceiver 1101 is further configured to perform, under control of the processor 1102, the small data packet transmission to the user equipment by using the second RB.

Further, the transceiver 1101 is specifically configured to perform, under control of the processor 1102, the small data packet transmission to a core network device by using a first S 1 bearer between the base station and the core network device, where the first S 1 bearer is set up by the user equipment for completing transmission of another radio bearer message before the user equipment sends an uplink small data packet.

Further, the transceiver 1101 is specifically configured to transmit a data packet to the core network device by using the first S1 bearer, where the data packet carries second indication information, and the second indication information is used to indicate that the data packet is a small data packet.

The small data packet transmission is transmitting a downlink small data packet by the base station to the user equipment.

Further, the transceiver 1101 is specifically configured to transmit, under control of the processor 1102, the downlink small data packet to the user equipment according to the second indication information and by using the second RB.

Alternatively, the transceiver 1101 is further configured to: send, to a core network device under control of the processor 1102, an identifier of a second S1 bearer set up for the small data packet transmission.

Alternatively, the transceiver 1101 is specifically configured to perform the small data packet transmission to the core network device by using the second S1 bearer corresponding to the identifier of the second S 1 bearer.

Further, the transceiver 1101 is further configured to send, under control of the processor 1102, third indication information to the core network device, where the third indication information is used to indicate, to the core network device, the small data packet transmission.

The entity apparatus in this embodiment may be configured to execute the technical solutions on a base station side in the method embodiments shown in FIG. 3 to FIG. 6, implementation principles and technical effects thereof are similar, and details are not described herein.

FIG. 12 is a schematic structural diagram of still another embodiment of user equipment according to the present invention. As shown in FIG. 12, the user equipment may include: a transceiver 1201, a processor 1202, and a memory 1203, and the transceiver 1201, the processor 1202, and the memory 1203 communicate by using a bus.

The memory 1203 is configured to store an instruction.

The processor 1202 is configured to run the instruction in the memory 1203 to control the transceiver 1201 to execute a sending operation.

The transceiver 1201 is configured to send, under control of the processor 1202, a radio resource control RRC connection request to a base station, where the RRC connection request includes first indication information, and the first indication information is used to indicate, to the base station, small data packet transmission.

The transceiver 1201 is further configured to receive an RRC connection setup message sent by the base station, where the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB.

The processor 1202 is further configured to run the instruction in the memory 1203, so as to set up the first RB according to the configuration information of the first RB, and set up the second RB according to the configuration information of the second RB.

The transceiver 1201 is further configured to send, under control of the processor 1202, an RRC setup complete message to the base station by using the second RB.

The transceiver 1201 is further configured to perform, under control of the processor 1202, the small data packet transmission to the base station by using the second RB.

Further, that the transceiver 1201 performs the small data packet transmission to the base station by using the second RB is specifically:
the small data packet transmission is transmitting a downlink small data packet by the base station to the user equipment, or the small data packet transmission is transmitting an uplink small data packet by the user equipment to the base station.

The entity apparatus in this embodiment may be configured to execute the technical solutions on a user equipment side in the method embodiments shown in FIG. 3 to FIG. 6, implementation principles and technical effects thereof are similar, and details are not described herein.

Persons of ordinary skill in the art may understand that all or some of the steps of the foregoing method embodiments may be implemented by a program instructing relevant hardware. The foregoing program may be stored in a computer-readable storage medium. When the program runs, the steps of the foregoing method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A small data packet transmission method, comprising:
Receiving, by a base station, a radio resource control RRC connection request sent by user equipment, wherein the RRC connection request comprises first indication information, and the first indication information is used to indicate, to the base station, small data packet transmission;
Sending, by the base station, an RRC connection setup message to the user equipment, wherein the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
Receiving, by the base station, an RRC setup complete message sent by the user equipment by using the first RB; and
Performing, by the base station, the small data packet transmission to the user equipment by using the second RB.

2. The method according to claim 1, wherein after the receiving, by the base station, an RRC setup complete message sent by the user equipment, the method further comprises:
performing, by the base station, the small data packet transmission to a core network device by using a first S1 bearer between the base station and the core network device, wherein the first S1 bearer is set up by the user equipment for completing transmission of another radio bearer message before the user equipment sends the uplink small data packet.

3. The method according to claim 2, wherein the performing, by the base station, the small data packet transmission to a core network device by using a first S1 bearer between the base station and the core network device comprises: transmitting, by the base station, a data packet to the core network device by using the first S1 bearer, wherein the data packet carries second indication information, and the second indication information is used to indicate that the data packet is a small data packet.

4. The method according to claim 3, wherein the small data packet transmission is transmitting a downlink small data packet by the base station to the user equipment; and
the performing, by the base station, the small data packet transmission to the user equipment by using the second RB comprises: transmitting, by the base station, the downlink small data packet to the user equipment according to the second indication information and by using the second RB.

5. The method according to claim 1, wherein after the receiving, by the base station, an RRC setup complete message sent by the user equipment, the method further comprises: sending, by the base station to the core network device, an identifier of a second S 1 bearer set up for the small data packet transmission; and
performing, by the base station, the small data packet transmission to the core network device by using the second S1 bearer between the base station and the core network device comprises: performing, by the base station, the small data packet transmission to the core network device by using the second S 1 bearer corresponding to the identifier of the second S 1 bearer.

6. The method according to any one of claims 1 to 5, wherein after the receiving, by the base station, an RRC setup complete message sent by the user equipment, the method further comprises:
sending, by the base station, third indication information to the core network device, wherein the third indication information is used to indicate, to the core network device, the small data packet transmission.

7. A small data packet transmission method, comprising:
Sending, by user equipment, a radio resource control RRC connection request to a base station, wherein the RRC connection request comprises first indication information, and the first indication information is used to indicate, to the base station, small data packet transmission;
Receiving, by the user equipment, an RRC connection setup message sent by the base station, wherein the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
setting up, by the user equipment, the first RB according to the configuration information of the first RB, and setting up the second RB according to the configuration information of the second RB;
sending, by the user equipment, an RRC setup complete message to the base station by using the first RB; and
performing, by the user equipment, the small data packet transmission to the base station by using the second RB.

8. The method according to claim 7, wherein the small data packet transmission is transmitting a downlink small data packet by the base station to the user equipment; or the small data packet transmission is transmitting an uplink small data packet by the user equipment to the base station.

9. Abase station, comprising:
a first receiving module, configured to receive a radio resource control RRC connection request sent by user equipment, wherein the RRC connection request comprises first indication information, and the first indication information is used to indicate, to the base station, small data packet transmission;
a control module, configured to control a sending module to execute a sending operation, and configured to control a communications module to execute a communication operation;
the sending module, configured to send, under control of the control module, an RRC connection setup message to the user equipment, wherein the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
a second receiving module, configured to receive an RRC setup complete message sent by the user equipment by using the first RB; and
the communications module, configured to perform, under control of the control module, the small data packet transmission to the user equipment by using the second RB.

10. The base station according to claim 9, wherein the communications module is specifically configured to perform, under control of the control module, the small data packet transmission to a core network device by using a first S 1 bearer between the base station and the core network device, wherein the first S 1 bearer is set up by the user equipment for completing transmission of another radio bearer message before the user equipment sends the uplink small data packet.

11. The base station according to claim 10, wherein the communications module is specifically configured to transmit a data packet to the core network device by using the first S1 bearer, wherein the data packet carries second indication information, and the second indication information is used to indicate that the data packet is a small data packet.

12. The base station according to claim 11, wherein the small data packet transmission is transmitting a downlink small data packet by the base station to the user equipment; and
the communications module is specifically configured to transmit the downlink small data packet to the user equipment according to the second indication information and by using the second RB.

13. The base station according to claim 9, wherein the sending module is further configured to send, to the core network device under control of the control module, an identifier of a second S 1 bearer set up for the small data packet transmission; and
the communications module is specifically configured to perform the small data packet transmission to the core network device by using the second S1 bearer corresponding to the identifier of the second S 1 bearer.

14. The base station according to any one of claims 9 to 13, wherein the sending module is further configured to send, under control of the control module, third indication information to the core network device, wherein the third indication information is used to indicate, to the core network device, the small data packet transmission.

15. User equipment, comprising:
a control module, configured to control a first sending module and a second sending module to execute a sending operation, configured to control a setup module to execute a setup operation, and configured to control a communications module to execute a communication operation;
the first sending module, configured to send, under control of the control module, a radio resource control RRC connection request to a base station, wherein the RRC connection request comprises first indication information, and the first indication information is used to indicate, to the base station, small data packet transmission;
a receiving module, configured to receive an RRC connection setup message sent by the base station, wherein the RRC connection setup message carries configuration information that is of a first radio bearer RB and allocated for RRC message transmission, and configuration information that is of a second radio bearer RB and allocated for the small data packet transmission, the second RB is a second RB set up for the small data packet transmission according to the first indication information, and the configuration information of the second RB is used to provide a parameter for the user equipment to set up the second RB;
the setup module, configured to set up the first RB according to the configuration information of the first RB, and set up the second RB according to the configuration information of the second RB;
the second sending module, further configured to send, under control of the control module, an RRC setup complete message to the base station by using the first RB; and
the communications module, configured to perform, under control of the control module, the small data packet transmission to the base station by using the second RB.

16. The user equipment according to claim 15, wherein the small data packet transmission is transmitting a downlink small data packet by the base station to the user equipment; or the small data packet transmission is transmitting an uplink small data packet by the user equipment to the base station.
